# EUROPÄISCHE PATENTSCHRIFT

(11) **EP 2 769 036 B1**
(45) Veröffentlichungstag und Bekanntmachung des Hinweises auf die Patenterteilung: **13.02.2019**
(21) Anmeldenummer: 12822992.9
(22) Anmeldetag: 26.10.2012
(51) Int. Cl.: E05B 17/08, E05B 15/10, E05B 85/20

(54) **KRAFTFAHRZEUGSCHLOSS MIT SELBSTSTÄNDIGER RÜCKFETTUNG**
MOTOR VEHICLE LOCK WITH AUTOMATIC RELUBRICATION
SERRURE POUR VÉHICULE AUTOMOBILE DOTÉE D'UNE RELUBRIFICATION AUTONOME

(30) Priorität: 21.10.2011 DE 102011084960
(43) Veröffentlichungstag der Anmeldung: 27.08.2014
(73) Patentinhaber: Kiekert Aktiengesellschaft, 42579 Heiligenhaus (DE)
(72) Erfinder: RIEDEL, Christian, 45468 Mülheim (DE)
(86) Internationale Anmeldenummer: PCT/IB2012/002829
(87) Internationale Veröffentlichungsnummer: WO 2013/057591

(56) Entgegenhaltungen:
- DE-A1- 19 808 576
- DE-A1-102007 024 564
- JP-A- 2007 092 465

## Beschreibung

Die Erfindung betrifft ein Schloss insbesondere für ein Kraftfahrzeug oder ein Gebäude mit einem Gesperre umfassend eine drehbare Drehfalle mit wenigstens einer drehbaren Sperrklinke für ein Verrasten der Drehfalle. Das Gesperre kann eine Hauptrast-Sperrklinke für ein Verrasten der Drehfalle in einer Hauptrastposition und eine Vorrast-Sperrklinke für ein Verrasten der Drehfalle in einer Vorrastposition umfassen. Darüber hinaus kann es zumindest einen schwenkbar gelagerten Blockadehebel geben, mit dem die Bewegung einer Sperrklinke blockiert wird, wenn sich die Sperrklinke in ihrer verrastenden Stellung befindet. Ein solches Schloss verfügt über eine Schlossplatte oder einen Schlosskasten für die Anbringung von Komponenten des Schlosses wie Drehfalle, Sperrklinke oder Blockadehebel. Die Erfindung betrifft ferner ein zugehöriges Verfahren für eine Rückfettung einer Reibfläche bei einem solchen Schloss.

Ein solches Schloss dient zum zeitweisen Verschließen von Öffnungen in Kraftfahrzeugen oder Gebäuden mit Hilfe von Türen oder Klappen. Im geschlossenen Zustand eines solchen Schlosses greift die Drehfalle um den in der Regel bügelförmig ausgeführten Schließbolzen - auch Schlosshalter genannt - herum, der im Fall eines Kraftfahrzeugs meistens an der Karosserie befestigt ist. Erreicht die Drehfalle durch ein Verschwenken ausgehend von einer geöffneten Stellung eine Schließstellung, so wird die Drehfalle schließlich mittels der Sperrklinke verrastet. Dann kann die Drehfalle nicht mehr in Richtung geöffnete Stellung zurückgedreht werden und der Schließbolzen das Gesperre nicht mehr verlassen. Für ein Öffnen ist es erforderlich, die Sperrklinke aus der Raststellung heraus zu bewegen.

In der Schließstellung sind die Sperrflächen von Drehfalle und Sperrklinke beim Verrasten gegeneinander verpresst. Beide Sperrflächen bestehen in der Regel aus Metall. Für ein Lösen gleitet eine Sperrfläche über die andere hinweg, wobei Reibungskräfte zu überwinden sind. Zwischen den beiden Sperrklinken gibt es daher einen Reibkontakt

Sowohl die Drehfalle als auch die Sperrklinke sind üblicherweise mit einer Bohrung für eine durch die Bohrung hindurchgeführte Achse versehen, um so Drehfalle und Sperrklinke drehbar zu lagern. Entweder kann die drehbare Komponente, also die Drehfalle oder die Sperrklinke um die Achse herum verschwenkt werden, oder aber es gibt eine feste Verbindung zwischen Drehfalle bzw. Sperrklinke und der Achse, die ihrerseits dann drehbar gelagert ist.

Um zu vermeiden, dass eine Sperrklinke nicht unplanmäßig aus ihrer Raststellung heraus bewegt wird, kann ein Blockadehebel vorgesehen sein, der eine solche Bewegung blockiert, wenn die Drehfalle in einer Schließstellung verrastet ist.

Ein typischer Aufbau eines Gesperres eines Kraftfahrzeugschlosses wird in der DE 103 20 457 A1 offenbart. Die hieraus bekannte Anordnung und geometrische Gestaltung von Drehfalle und Sperrklinke kann auch bei der vorliegenden Erfindung verwirklicht sein.

Aus Stabilitätsgründen bestehen die Drehfalle sowie die Sperrklinke grundsätzlich im Wesentlichen aus Metall. Zumindest überwiegend werden solche Metallteile mit einer Kunststoffschicht überbedeckt, um Öffnungs- und Schließgeräusche sowie Reibungskräfte zu minimieren. In der Figur 1 der DE 103 20 457 A1 erkennt ein Fachmann eine solche typische Kunststoffbeschichtung der Drehfalle.

Ein Schloss umfasst also eine Mehrzahl von beweglichen, insbesondere drehbaren Komponenten. Für einen Betrieb der beweglichen Komponenten ist es erforderlich, Schmiermittel an dafür geeigneten Stellen vorzusehen, um Reibungsverluste zu minimieren und Blockaden von Bewegungen zu vermeiden. So ist es beispielsweise erforderlich, Achsen zu schmieren, um Drehbewegungen zuverlässig aufrecht erhalten zu können. Es gibt darüber hinaus Bereiche, die zweckmäßigerweise ebenfalls geschmiert werden sollten, so zum Beispiel die Sperrflächen, die für ein Verrasten der Drehfalle gegeneinander gepresst sind. Denn für ein Entrasten ist es erforderlich, dass eine beteiligte Sperrklinken-Sperrfläche sich von der anderen beteiligten Drehfallen-Sperrfläche durch eine Gleitbewegung wieder löst. Eine solche Gleitbewegung wird durch ein Schmiermittel gefördert. Außerdem werden bei Sperrflächen, die voneinander durch eine Gleitbewegung gelöst werden, vorteilhaft Öffnungsgeräusche durch Vorsehen eines Gleitmittels zwischen den Sperrflächen vermindert.

Es ist Aufgabe der Erfindung, ein zuverlässig und leise arbeitendes Schloss der eingangs genannten Art nebst einem entsprechenden Verfahren zu schaffen.

Die Aufgabe der Erfindung wird durch ein Schloss mit den Merkmalen des ersten Anspruchs sowie durch ein Verfahren mit den Merkmalen des Nebenanspruchs gelöst. Vorteilhafte Ausgestaltungen ergeben sich aus den Unteransprüchen.

Zur Lösung der Aufgabe umfasst ein Schloss ein Gesperre mit drehbarer Drehfalle und wenigstens einer drehbaren Sperrklinke für ein Verrasten der Drehfalle. Das Schloss umfasst ferner zwei Flächen, die zumindest zeitweise aneinander anliegen und die zumindest wiederkehrend relativ zueinander verschoben werden, so dass durch das Verschieben zwischen den Flächen Reibungskräfte auftreten. Eine solche Fläche wird nachfolgend Reibfläche genannt. Zumindest eine Reibfläche ist Teil einer drehbaren Komponente des Schlosses. Dieser drehbaren Komponente ist ein Schmiermittelreservoir zugeordnet. Es gibt eine Zuführung vom Schmiermittelreservoir zur Reibfläche der drehbaren Komponente, die derart gestaltet ist, dass Schmiermittel vom Schmiermittelreservoir zur Reibfläche insbesondere aufgrund von Drehbewegungen, aufgrund von Kapillarkräften, aufgrund von anderen Adhäsion- und/ oder Kohäsionskräften bzw. aufgrund von Spreitung der drehbaren Komponente transportiert wird. Ein Transport kann außerdem durch Vibrationen zumindest unterstützt sein, die beispielsweise während des Betriebs eines Kraftfahrzeugs auftreten. Es gelingt so eine fortwährende Rückfettung, was Reibungskräfte und mit der Reibung einhergehende Geräusche minimiert.

Der Abstand zwischen Schmiermittelreservoir und Drehachse der drehbaren Komponente ist in einer Ausgestaltung geringer als der Abstand zwischen der Reibfläche der drehbaren Komponente und dieser Drehachse, um einen Transport vom Schmiermittelreservoir zur Reibfläche durch Fliehkräfte während einer Drehbewegung zumindest zu unterstützen. Das Schmiermittelreservoir grenzt insbesondere an die drehbare Komponente an oder ist Teil der drehbaren Komponente. Die drehbare Komponente umfasst insbesondere eine solche Zuführung, durch die Schmiermittel vom Schmiermittelreservoir zur Reibfläche transportiert werden kann.

Eine derartige Zuführung von einem Schmiermittelreservoir zur Reibfläche ist vorzugsweise so dimensioniert und gestaltet, dass Schmiermittel vom Schmiermittelreservoir zur Reibfläche aufgrund von Kapillarkräften, Spreitung, Adhäsions- und/ oder Kohäsionskräften gelangt oder aber derartige Kräfte einen solchen Transport zumindest fördern. Der Erfindung liegt also der Gedanke zugrunde, für einen Schmiermitteltransport vom Schmiermittelreservoir zur Reibfläche keinen Antrieb vorzusehen, der einen zusätzlichen Energieaufwand erfordert, sondern nur solche Kräfte, die ohnehin für den Betrieb des Schlosses aufgewendet werden müssen, oder aber Anziehungs- oder Abstoßungskräfte, die keine gesonderte Energiezufuhr erforderlich machen.

Ist das Schmiermittel in einer Ausführungsform der Erfindung beispielsweise einmal in den Bereich des Schlosshalters gelangt, können Stäube im Bereich des Schlosshalters und im Bereich des nicht mit Kunststoff ummantelten Bereichs der Drehfalle das Schmiermittel aufsaugen. Dieses Aufsaugen erzeugt eine Sogwirkung, die den Transport des Schmiermittels unterstützt. Auch eine derartige Sogwirkung stellt eine Kraft dar, die einen erfindungsgemäßen Transport bewirken oder zumindest fördern kann.

Die Zuführung verläuft vorzugsweise auf kürzestem Weg vom Schmiermittelreservoir zur Reibfläche. Dies ist aber nicht zwingend erforderlich, um die Aufgabe der Erfindung zu lösen, sondern lediglich zweckmäßig, u. a. weil dadurch der Bauraumbedarf minimiert wird.

Die Reibfläche, die mit einem Schmiermittel bzw. Schmierstoff versorgt wird, besteht in der Regel aus einer metallischen Oberfläche. Im Fall einer metallischen Oberfläche mit Reibkontakt besteht ein erhöhter Bedarf für eine Schmierung.

Durch Drehbewegungen der drehbaren Komponente, die während des Betriebs des Schlosses erfolgen, wird in einer Ausführungsform über die Zuführung Schmiermittel vom Schmiermittelreservoir zu der Reibfläche transportiert. Es gelingt so eine regelmäßige, also rückfettende Schmierung der Reibfläche. Hierdurch werden Reibungskräfte vorteilhaft dauerhaft minimiert und Geräuschentwicklungen aufgrund von hohen Reibungskräften vermieden.

Gemäß der Erfindung umfasst die Zuführung eine Ummantelung für die drehbare Komponente, beispielsweise eine aus Kunststoff bestehende Ummantelung um einen beispielsweise aus Metall bestehenden Grundkörper der drehbaren Komponente. Ein Bereich zwischen Ummantelung und dem Grundkörper der drehbaren Komponente, durch den ein Schmiermittel vom Fettreservoir zur Reibfläche gelangt, bildet dann die Zuführung. Dieser Bereich kann kanalartig oder großflächig gestaltet sein. Die Ummantelung umfasst einen Auslass angrenzend an die Reibfläche der drehbaren Komponente derart, dass ein Schmiermittel wie Fett oder Öl zu der Reibfläche gelangt. Diese Ausführungsform erfordert einen nur geringen Bauraum. Außerdem ist die Zuführung gut geschützt. Eine derartige Ausführungsform ermöglicht einen erfindungsgemäßen Transport aufgrund von Spreitung bzw. aufgrund von entsprechenden physikalischen Kräften, die eine Spreitung bewirken können.

Drehbare Komponenten eines gattungsgemäßen Schlosses bestehen regelmäßig aus einem aus Metall bestehenden Grundkörper mit einer aus Kunststoff bestehenden Ummantelung. Wird eine solche Ummantelung nun so gestaltet, dass dadurch eine Zuführung vom Schmiermittelreservoir zur Reibfläche bereitgestellt ist, so wird so der Fertigungsaufwand vorteilhaft minimiert.

Eine Zuführung umfasst in einer Ausführungsform ein oder mehrere Kanäle oder Kapillaren, die zumindest dazu beitragen, dass ein Schmiermittel von einem Schmiermittelreservoir zu einer Reibfläche der betroffenen drehbaren Komponente durch Drehbewegungen der drehbaren Komponente transportiert wird. Ein solcher Kanal kann durch eine Ummantelung umspritzt worden sein. Damit verhindert wird, dass durch das Umspritzen ein solcher Kanal durch Kunststoff zugesetzt wird, kann ein Kanal zuvor bereits mit einem Schmiermittel oder mit einem anderen herauslösbaren Stoff gefüllt sein.

In einer Ausführungsform der Erfindung ist die drehbare Komponente eine Drehfalle, eine Sperrklinke und/oder ein Blockadehebel. Als Schmiermittel wird in einer Ausführungsform der Erfindung ein Fett oder ein Öl eingesetzt.

Die Menge an Schmiermittel, die durch eine Drehbewegung und/ oder auf andere erfindungsgemäße Weise transportiert wird, kann durch die Dimensionierung der Zuführung gesteuert oder zumindest der Menge nach begrenzt werden. Je größer ein Querschnitt der Zuführung ist, umso mehr Schmiermittel wird durch Drehbewegungen und/ oder aufgrund von anderen erfindungsgemäßen Kräften vom Schmiermittelreservoir in Richtung Reibfläche transportiert. In einer Ausführungsform der Erfindung sind die Zuführung und Schmiermittelreservoir so dimensioniert, dass über die gesamte vorgesehene Lebensdauer des Schlosses bzw. vorgesehene Zahl an Drehbewegungen Schmiermittel zur Reibfläche transportiert wird. Dies ist aber zur Lösung der Aufgabe nicht zwingend erforderlich. Es genügen also bereits kleine Mengen an Schmiermittel in einem Schmiermittelreservoir, um den beschriebenen positiven Effekt zumindest zeitweise hervorzurufen.

In einer Ausführungsform der Erfindung dient das Schmiermittelreservoir der Schmierung von zwei oder mehr Reibflächen der drehbaren Komponente. Eine Reibfläche kann eine Fläche sein, die dem Verrasten oder Blockieren dient. Eine Reibfläche kann ein Achsbereich oder eine Lagerung sein, durch die die drehbare Komponente drehbar gelagert wird. Es genügt also eine Relativbewegung, um eine drehbare oder bewegbare Komponente im Sinne der vorliegenden Erfindung zu sein.

In einer Ausführungsform der Erfindung befindet sich das Schmiermittelreservoir angrenzend an die Achse der drehbaren Komponente mit der Reibfläche Und/ oder angrenzend an ein zugehöriges Lager. Damit kann das Schmiermittelreservoir vorteilhaft sowohl der Schmierung einer Achse als auch der Schmierung einer weiteren Reibfläche dienen.

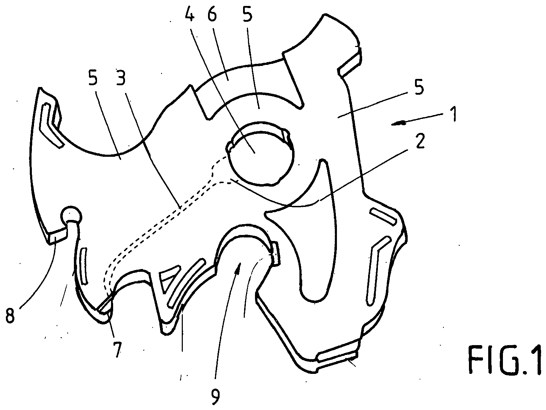

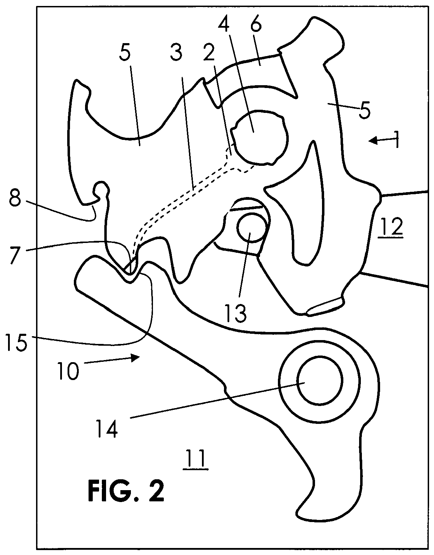

Nachfolgend wird die Erfindung anhand der Figuren 1 und 2 näher erläutert.

Es zeigen
- Fig. 1:: Drehfalle für ein Gesperre
- Fig. 2:: Gesperre in der Hauptrastposition

Die Figur 1 zeigt eine Aufsicht auf eine Drehfalle 1, also auf eine drehbare Komponente eines Schlosses für ein Kraftfahrzeug. Die Drehfalle 1 umfasst ein Schmiermittelreservoir 2 sowie eine Zuführung 3. Es gibt eine an das Schmiermittelreservoir 2 angrenzende Bohrung 4, die der drehbaren Lagerung der Drehfalle 1 dient. Durch die Bohrung 4 wird eine Achse hindurchgeführt, die auf einer nicht gezeigten Schlossplatte des Schlosses befestigt ist.

Bis auf eine vorzugsweise einteilig zusammenhängende Kunststoffbeschichtung 5 besteht der Grundkörper 6 der Drehfalle 1 vollständig aus Metall. Das Schmiermittelreservoir 2 sowie die Zuführung 3 befinden sich unterhalb der Kunststoffbeschichtung 5 und zwar zwischen dem metallischen Grundkörper 6 und der Kunststoffbeschichtung 5. Schmiermittelreservoir 2 sowie Zuführung 3 werden daher lediglich durch gestrichelte Linien angedeutet. Die Zuführung 3 wird als schmaler Kanalbereich dargestellt. Eine Zuführung 3 kann aber auch stattdessen großflächig sein.

Die Kunststoffbeschichtung 5 erstreckt sich von der dargestellten Oberseite aus über die seitliche Kontur der Drehfalle 1 hin zur Unterseite und bedeckt die Drehfalle auf der Unterseite in gleicher Weise wie auf der Oberseite.

Die Drehfalle 1 umfasst eine Sperrfläche 7, die aus Metall besteht und die nicht mit Kunststoff beschichtet ist. Diese Sperrfläche 7 dient dem Verrasten der Drehfalle 1 in der Hauptraststellung, wie in der Figur 2 gezeigt wird. Eine metallische Sperrfläche 8 dient dem Verrasten der Drehfalle 1 in der Vorrastposition. Die Zuführung 3 führt zu der Sperrfläche 7. Ein Schmiermittel wie zum Beispiel ein Fett wird aufgrund von Drehbewegungen der Drehfalle 1 und/ oder aufgrund von Spreitung, Adhäsion oder Kohäsion vom Reservoir 2 durch die Zuführung 3 zur Sperrfläche 7 transportiert. Das Fett tritt in diesem Bereich zwischen der Ummantelung 5 und dem metallischen Grundkörper 6 aus und gelangt im Anschluss daran zur Sperrfläche 7, die eine Reibfläche im Sinne der vorliegenden Erfindung ist. Alternativ oder ergänzend kann eine Zuführung von dem Reservoir 2 zur Sperrfläche 8 führen.

Die Drehfalle verfügt über einen Einlaufschlitz 9, in den ein Schlosshalter hinein gelangt, wenn eine zugehörige Tür oder Klappe geschlossen wird. Ein Schlosshalter bzw. Schließbolzen verdreht durch das Schließen die Drehfalle von einer geöffneten Stellung in eine Schließstellung, in der die Drehfalle durch eine Sperrklinke verrastet wird.

In der Figur 2 wird ein Gesperre umfassend eine erfindungsgemäße Drehfalle 1 und eine Sperrklinke 10 in der Hauptrastposition in Aufsicht dargestellt. Die Drehfalle 1 und die Sperrklinke 10 sind auf einer Schlossplatte 11 drehbar gelagert. Die Schlossplatte 11 verfügt über einen Einlaufmaul 12, in welches ein Schließbolzen bzw. Schlosshalter 13 hinein bewegt werden kann. Im Fall der Figur 2 wird der Schließbolzen 13 von der Drehfalle 1 gehalten, so dass der Schließbolzen 13 das Gesperre nicht mehr verlassen kann.

Wird die Sperrklinke 10 entgegengesetzt zum Uhrzeigersinn um ihre Achse 14 herum verschwenkt, so gleitet die Sperrfläche 7 der Drehfalle über die Sperrfläche 15 der Sperrklinke 10. Schließlich verlässt die Sperrklinke 10 ihre Rastposition und gibt die Drehfalle 1 frei. Die Drehfalle 1 kann dann entgegengesetzt zum Uhrzeigersinn in ihre geöffnete Stellung verschwenkt werden. Der Schließbolzen 13 kann anschließend das Gesperre verlassen und eine entsprechende Tür oder Klappe kann geöffnet werden.

### Bezugszeichenliste

- 1: Drehfalle
- 2: Schmiermittelreservoir
- 3: Zuführung
- 4: Bohrung
- 5: Kunststoffbeschichtung
- 6: Grundkörper der Drehfalle
- 7: HauptSperrfläche
- 8: VorSperrfläche
- 9: Einlaufschlitz
- 10: Sperrklinke
- 11: Schlossplatte
- 12: Einlaufmaul
- 13: Schlosshalter
- 14: Achse der Sperrklinke
- 15: Sperrklinken-Sperrfläche

## Patentansprüche

1. Schloss umfassend ein Gesperre mit Drehfalle (1) und wenigstens einer Sperrklinke (10) für ein Verrasten der Drehfalle (1), mit einem Reibkontakt zwischen zwei Reibflächen (7, 15), wobei zumindest eine Reibfläche (7) Teil einer drehbaren Komponente (1) des Schlosses Ist und einem Schmiermittelreservoir (2) sowie einer Zuführung (3) vom Schmlermittelreservoir (2) zur Reibfläche (7) der drehbaren Komponente (1) **dadurch gekennzeichnet, dass** die Zuführung (3) zwischen einem Grundkörper (6) der drehbaren Komponente (1) und einer Ummantelung (5) des Grundkörpers (6) verläuft.

2. Schloss nach Anspruch 1, **dadurch gekennzeichnet, dass** der Abstand zwischen Schmlermittelreservoir (2) und Drehachse (4) der drehbaren Komponente (1) kleiner Ist als der Abstand zwischen der Reibfläche (7) der drehbaren Komponente (1) und dieser Drehachse (4).

3. Schloss nach einem der vorhergehenden Ansprüche, **dadurch gekennzeichnet, dass** das Schmiermittelreservoir (2) an die drehbare Komponente (1) angrenzt oder Teil der drehbaren Komponente (1) ist und/ oder die Zuführung (3) Bestandteil der drehbaren Komponente (1) Ist.

4. Schloss nach einem der vorhergehenden Ansprüche, **dadurch gekennzeichnet, dass** die Zuführung (3) auf kürzestem Weg vom Schmiermittelreservoir (2) zur Reibfläche (7) verläuft.

5. Schloss nach einem der vorhergehenden Ansprüche, **dadurch gekennzeichnet, dass** die Reibfläche (7) aus Metall besteht.

6. Schloss nach dem vorhergehenden Anspruch, **dadurch gekennzeichnet, dass** der Grundkörper (6) aus Metall besteht und/ oder die Ummantelung (5) aus Kunststoff.

7. Schloss nach einem der vorhergehenden Ansprüche, **dadurch gekennzeichnet, dass** die Zuführung (3) eine Kapillare oder einen Kanal umfasst.

8. Schloss nach einem der vorhergehenden Ansprüche, **dadurch gekennzeichnet, dass** die drehbare Komponente eine Drehfalle (1), eine Sperrklinke (10) und/oder ein Blockadehebel ist und/ oder als Schmiermittel ein Fett oder ein Öl vorhanden ist.

9. Schloss nach einem der vorhergehenden Ansprüche, **dadurch gekennzeichnet dass** die Reibfläche (7) der drehbaren Komponente eine Sperrfläche (7) einer Sperrklinke, einer Drehfalle (1) oder eines Blockadehebels Ist.

10. Verfahren für den Betrieb eines Schlosses nach einem der vorhergehenden Ansprüche, bel dem ein Schmiermittel vom Schmiermittelreservoir (2) zur Reibfläche (7) der drehbaren Komponente (1) durch Drehbewegungen der drehbaren Komponente (1), aufgrund von Adhäsionskräften, aufgrund von Kohäsionskräften und/ oder aufgrund von Spreltung transportiert wird und bei dem die Zuführung (3) zwischen einem Grundkörper (6) der drehbaren Komponente (1) und einer Ummantelung (5) des Grundkörpers (6) verläuft.

## Claims

1. Lock comprising a locking mechanism with a rotary latch (1) and at least one pawl (10) for ratcheting the rotary latch (1), with a frictional contact between two friction surfaces (7, 15), wherein at least one friction surface (7) is part of a rotatable component (1) of the lock and a lubricant reservoir (2), as well as a feed (3) from the lubricant reservoir (2) to the friction surface (7) of the rotatable component (1,) **characterized in that** the feed (3) is installed between a basic body (6) of the rotatable component (1) and a casing (5) of the basic body (6).

2. Lock according to claim 1, **characterized in that** the distance between the lubricant reservoir (2) and the axis of rotation (4) of the rotatable component (1) is smaller than the distance between the friction surface (7) of the rotatable component (1) and this axis of rotation (4).

3. Lock according to one of the preceding claims, **characterized in that** the lubricant reservoir (2) is adjacent to the rotatable component (1) or part of the rotatable component (1) and / or the feed (3) is part of the rotatable component (1).

4. Lock according to one of the preceding claims, **characterized in that** the feed (3) extends over the shortest path from the lubricant reservoir (2) to the friction surface (7).

5. Lock according to one of the preceding claims, **characterized in that** the friction surface (7) is made of metal.

6. Lock according to the preceding claim, **characterized in that** the basic body (6) consists of metal and / or the sheath (5) is made of plastic.

7. Lock according to one of the preceding claims, **characterized in that** the feed (3) comprises a capillary or a channel.

8. Lock according to one of the preceding claims, **characterized in that** the rotatable component is a rotary latch (1), a pawl (10) and / or a blocking lever and / or a grease or oil is present as a lubricant.

9. Lock according to one of the preceding claims, **characterized in that** the friction surface (7) of the rotatable component is a locking surface (7) of a pawl, a rotary latch (1) or a blocking lever.

10. Method for operating a lock according to one of the preceding claims, wherein a lubricant from the lubricant reservoir (2) is transported to the friction surface (7) of the rotatable component (1) by rotational movements of the rotatable component (1), due to adhesion forces, due to cohesive forces and / or is transported due to spreading and wherein the feed (3) runs between a basic body (6) of the rotatable component (1) and a sheath (5) of the basic body (6).

## Revendications

1. Serrure comprenant un mécanisme de verrouillage avec pêne tournant (1) et au moins un cliquet de verrouillage (10) pour un crantage du pêne tournant (1), avec un contact à friction entre deux surfaces de friction (7, 15), sachant qu'au moins une surface de friction (7) fait partie d'un composant rotatif (1) de la serrure, et avec un réservoir de lubrifiant (2) ainsi qu'avec une amenée (3) du réservoir de lubrifiant (2) vers la surface de friction (7) du composant rotatif (1), **caractérisée en ce que** l'amenée (3) circule entre un corps de base (6) du composant rotatif (1) et un enrobage (5) du corps de base (6).

2. Serrure selon la revendication 1, **caractérisée en ce que** l'écart entre le réservoir de lubrifiant (2) et l'axe de rotation (4) du composant rotatif (1) est inférieur à l'écart entre la surface de friction (7) du composant rotatif (1) et cet axe de rotation (4).

3. Serrure selon l'une des revendications précédentes, **caractérisée en ce que** le réservoir de lubrifiant (2) jouxte le composant rotatif (1) ou fait partie du composant rotatif (1) et/ou que l'amenée (3) fait partie intégrante du composant rotatif (1).

4. Serrure selon l'une des revendications précédentes, **caractérisée en ce que** l'amenée (3) emprunte le plus court chemin entre le réservoir de lubrifiant (2) et la surface de friction (7).

5. Serrure selon l'une des revendications précédentes, **caractérisée en ce que** la surface de friction (7) est en métal.

6. Serrure selon la revendication précédente, **caractérisée en ce que** le corps de base (6) est en métal et/ou que l'enrobage (5) est en plastique.

7. Serrure selon l'une des revendications précédentes, **caractérisée en ce que** l'amenée (3) comprend un capillaire ou un canal.

8. Serrure selon l'une des revendications précédentes, **caractérisée en ce que** le composant rotatif est un pêne tournant (1), un cliquet de verrouillage (10) et/ou un levier de blocage et qu'est présente une graisse ou une huile officiant de lubrifiant.

9. Serrure selon l'une des revendications précédentes, **caractérisée en ce que** la surface de friction (7) du composant rotatif est une surface de verrouillage (7) d'un cliquet de verrouillage, d'un pêne tournant (1) ou d'un levier de blocage.

10. Procédé de fonctionnement d'une serrure selon l'une des revendications précédentes, au cours duquel un lubrifiant est transporté du réservoir de lubrifiant (2) vers la surface de friction (7) du composant rotatif (1) par des mouvements rotatifs du composant rotatif (1) en raison de forces d'adhésion, en raison de forces de cohésion et/ou en raison d'un étalement, et au cours duquel fonctionnement l'amenée (3) circule entre un corps de base (6) du composant rotatif (1) et un enrobage (5) du corps de base (6).
